# EUROPEAN PATENT SPECIFICATION

(11) **EP 1 829 397 B1**
(45) Date of publication and mention of the grant of the patent: **02.08.2017**
(21) Application number: 05785531.4
(22) Date of filing: 11.08.2005
(51) Int. Cl.: H04W 48/18, H04W 36/32

(54) **BORDER ACCESS POINT PROTOCOL FACILITATING WIRELESS CLIENT MACRO-MOBILITY**
RANDZUGANGSPUNKTPROTOKOLL ZUR ERMÖGLICHUNG VON DRAHTLOSER CLIENT-MAKRO-MOBILITÄT
PROTOCOLE DE POINTS D'ACCES DE BORDURE FACILITANT LA MACRO MOBILITE DES CLIENTS DE RESEAUX SANS FIL

(30) Priority: 31.08.2004 US 931160
(43) Date of publication of application: 05.09.2007
(73) Proprietor: Airespace, Inc., Sam Jose CA 95134 (US)
(72) Inventor: O'HARA, Robert, B., Santa Clara, CA 95054 (US)
(74) Representative: Noble, Nicholas
(86) International application number: PCT/US2005/028665
(87) International publication number: WO 2006/026117

(56) References cited:
- EP-A2- 1 158 826
- WO-A1-00/67514
- WO-A1-02/054814
- WO-A1-2004/071111
- WO-A1-2005/022937
- US-A1- 2003 174 667
- US-A1- 2004 077 336
- US-A1- 2004 081 140
- US-A1- 2004 097 232
- US-A1- 2004 114 546
- US-A1- 2004 121 764
- US-A1- 2004 132 500
- US-A1- 2004 137 902
- US-A1- 2004 156 372
- US-A1- 2004 160 986
- US-A1- 2004 176 103
- US-B1- 6 424 834
- US-B1- 6 463 288
- US-B2- 6 744 753
- GEIER J. 802.11 BEACONS REVEALED, [Online] 31 October 2002, pages 1 - 6, XP008117149 Retrieved from the Internet: <URL:http://www.wi-fiplanet.com/lutorials/a rticle/php/1492071>
- GEIER J. 802.11 UNDERSTANDING 802.11 FRAME TYPES, [Online] 15 August 2002, pages 1 - 6, XP008117154 Retrieved from the Internet: <URL:http://www.wi-planet.com/tutorials/art icle.php/1447501>

## Description

### FIELD OF THE INVENTION

The present invention relates to wireless networks and, more particularly, to methods, apparatuses and systems directed to facilitating macro-mobility of wireless clients between different network domains or network types.

### BACKGROUND OF THE INVENTION

The rapidly expanding WLAN and Voice over Internet Protocol (VoIP) technologies have recently been combined to enable Wi-Fi Telephony, allowing VoIP call sessions over a WLAN infrastructure. The market adoption of wireless LAN (WLAN) technology has exploded, as users from a wide range of backgrounds and vertical industries bring this technology into homes, offices, and increasingly into the public air space. This inflection point highlights not only the limitations of earlier-generation systems, but the changing role WLAN technology now plays in people"s work and lifestyles, across the globe. Indeed, WLANs are rapidly changing from convenience networks to business-critical networks. Increasingly users are depending on WLANs to improve the timeliness and productivity of their communications and applications, and in doing so, require greater visibility, security, management, and performance from their network.

In addition, VoIP telephony has rapidly emerged as a viable and cost- effective alternative to circuit-switched voice networks. In Internet Protocol (IP) networks, particularly in enterprise LANs where bandwidth is ample and network management systems allow for enhanced network traffic control, voice and data traffic can peacefully co-exist on the network. In addition, the ubiquity of IP networks has opened the door to reliable, high-quality voice applications on either wired or wireless networks. Furthermore, the addition of Wi-Fi telephony leverages existing investments in WLANs, while reducing cost and increasing productivity and responsiveness for mobile employees in the workplace

To take advantage of Wi-Fi telephony, handset manufactures have begun to offer dual-mode telephones and personal digital assistants (PDAs) that provide cellular network and WLAN connectivity for data and voice applications. For example, Texas Instruments, Inc. has introduced WANDA, which stands for Wireless Any-Network Digital Assistant, is a handheld tri-band device that includes chip sets that support 802.11 WLAN, GSM/GPRS and Bluetooth^{™} connectivity. Other hand set vendors, such as Nokia, Inc.® and Motorola, Inc.®, have also announced similar offerings. The integration of VoIP over WLAN and cellular network technologies presents certain technical challenges for handset vendors and WLAN infrastructure providers. For example, given the wide ranging mobility of cellular phone handsets and other wireless devices, technology must be developed for identifying available networks (e.g., cellular networks, WLANs, etc.) and choosing between them upon initiation of a given application, such as a voice call. In addition, technology must be developed for facilitating handoffs of an active call or other session between WLAN access points (both intra-domain and inter-domain), as well as between a WLAN access point and the cell or base station of a cellular network. Indeed, development in this area, such as extensions to the Session Initiation Protocol (SIP), Mobile IP, and other technologies is ongoing.

WO 2005/022937, published on 10.03.2005, discloses a method that determines that a wireless device is detecting a triggering event. The triggering event includes detecting a WLAN border cell, detecting a first signal from an egress portal, or detecting a degradation in signal quality. The wireless device then detects at least one signal from an egress portal, determines that the wireless device is moving from the coverage area of a first communications system to the coverage area of a second communications system according to the order of signals received from the egress portal, initiates a registration sequence with the second wireless communication system in response to determining that the wireless device is moving from the coverage area of the first communications system to the coverage area of the second communications system, and conducts present and subsequent calls via the second wireless communication system. US 2004/137902 discloses a method for controlling handover between a first technology network and a second technology network by detecting information about regions of an area of the first technology network, and deciding whether to initiate a handover procedure between the first and second technology networks based on the detected region information.

In light of the foregoing, a need in the art exists for methods, apparatuses and systems that support, enable and/or facilitate wireless handset mobility across domains and/or network types. Embodiments of the present invention substantially fulfill this need.

### SUMMARY OF THE INVENTION

The present invention relates to a wireless network access point, a dual-mode wireless client and a method, as defined in independent claims 1, 21 and 42, respectively. In one implementation, the present invention provides a wireless network infrastructure comprising a plurality of access points, at least some of which are so- called border access points that provide border information to wireless clients. The border information, in one embodiment, indicates to the wireless client that the transmitting access point is proximal to the perimeter of the intended coverage area of the wireless network infrastructure. In another implementation, the border information indicates that the transmitting access point is proximal to a point of egress from, or ingress to, a coverage area. Wireless clients within range of the border access points can use the border information to facilitate or enhance selection of a network for initiation of a given section, as well as in handoff or other mobility operations between two network types or domains (e.g., a WLAN and a cellular network).

### DESCRIPTION OF THE DRAWINGS

Figure 1 is a schematic diagram of a physical space including a plurality of wireless access points positioned at various locations within the space.
Figure 2 is a functional block diagram showing a wireless network architecture, according to one implementation of the invention, in which the border access point functionality may be implemented.
Figure 3 is a functional block diagram illustrating an alternative wireless network system architecture in which the present invention may operate.
Figure 4 is a functional block diagram providing different VoIP over WLAN system architectures.
Figures 5A-5C are flow chart diagrams illustrating methods, according to various possible implementations of the invention, incorporating border information in the selection of a network for a new session.
Figures 5D and 5E are flow chart diagrams providing methods, according to one implementation of the invention, directed to handoff operations that incorporate border information in their decisional logic.
Figure 6 is a schematic diagram illustrating a portal and a plurality of proximally-located border access points.

### DESCRIPTION OF PREFERRED EMBODIMENT(S)

### A. Operating Environment

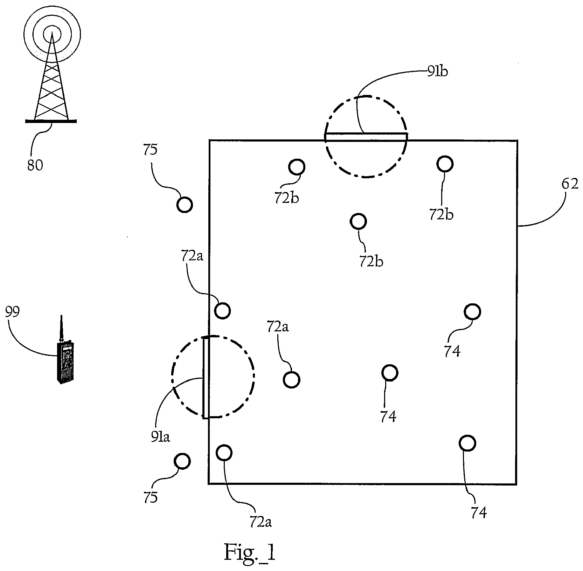

Figure 1 is a schematic diagram illustrating an enclosed physical space 62 including a plurality of access points 72, 74 positioned at various locations within the physical space 62 to provide wireless network access to one or more wireless clients. As Figure 1 illustrates, the physical space 62 includes portals 91a, 91b providing points of ingress to, and egress from, the physical space 62, such as doorways, entrance ways, hallways, entrance gates, and the like. In one implementation, portals are points of egress from and ingress to any intended physical area over which a plurality of wireless access points are deployed to provide radio coverage. As Figure 1 illustrates, border access points 72a, 72b are proximal to portals 91a, 91b respectively, while access points 74 are deployed at other locations within the physical space 62. Physical space 62 may be an enclosed indoor physical space, such as an office building, or an outdoor environment whether or not it is actually physically enclosed. In one implementation, border access points need not be located proximally to a portal and can merely be located proximal to the perimeter of a physical space where there is little to no physical restrictions on egress or ingress.

Figure 1 further shows a dual-mode wireless client 99, such as a dual-mode cellular telephone, capable of communicating in a first mode with a cellular network, via a base station 80 or cell tower, and in a second mode with a wireless network infrastructure, via wireless access points 72a, 72b and 74. The cellular network may implement any of a variety of wireless transmission methods, such as GSM, CDMA, TDMA, and the like. The dual-mode wireless client 99, in one implementation, further includes wireless LAN functionality that allows for communication with wireless access points. In one embodiment, dual-mode wireless client 99, and wireless access points 72a, 72b and 74, implement the 802.11 wireless network protocol (where 802.11, as used herein, generically refers to the IEEE 802.11 standard for wireless LANs and all its amendments). In one embodiment, the WLAN functionality described herein can be implemented in a wireless network interface chip set, such as an 802.11 network interface chip set. Of course, the present invention can be used in connection with any suitable radio- frequency-based wireless network protocol. In some implementations, dual-mode wireless client 99 may further include other call and network-related functionality, such as a Dynamic Host Control Protocol (DHCP) client, VoIP functionality that digitizes and packetizes voice signals, as well as call control and/or signaling functionality (e.g., interoperability with H.323, Session Initiation Protocol (SIP), Media Gateway Control Protocol (MGCP), Skinny Client Control Protocol (SCCP), etc.). As discussed more fully below, dual-mode wireless client 99 also includes access mode selection logic that incorporates information, if any, transmitted by border access points 72a, 72b in the selection of cellular network or WLAN connectivity for VoIP or other sessions. In one implementation, dual-mode wireless client 99 also includes functionality supporting handoffs between the cellular network and a WLAN during a session, such as a phone call.

For didactic purposes an embodiment of the present invention is described as operating in connection with a WLAN environment as disclosed in U.S. application Ser. Nos. 10/155,938 (US Patent No. 7,212,837) and 10/407,357 (US Patent No. 7,301,926). As discussed below, however, the present invention can be implemented according to a vast array of embodiments, and can be applied to a variety of WLAN architectures.

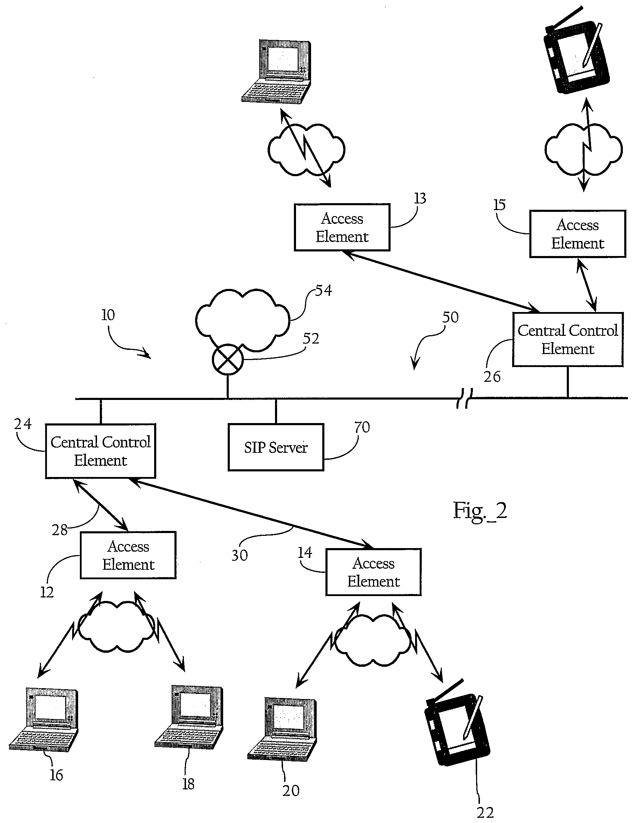

Figure 2 illustrates a wireless computer network topology according to an embodiment of the present invention. Referring to Figure 2, there is shown a block diagram of a wireless Local Area Network system 10 according to an embodiment of the invention. A specific embodiment of the invention includes the following elements: access elements 12, 14 for wireless communication with selected client remote elements 16, 18, 20, 22, central control elements 24, 26, and means for communication between the access elements and the central control elements, typically direct line access 28, 30, but potentially a wireless backbone, fiber or other reliable link. As disclosed in U.S. patent application Ser. No. 10/407,357 (US Patent No. 7,301,926), in another embodiment, the access elements, such as access elements 12, 14 are directly connected to LAN 10 or a virtual local area network (VLAN) for communication with a corresponding central control element 24, 26.

The access elements 12-15 are coupled via communication means using a wireless local area network (WLAN) protocol (e.g., IEEE 802.11a or 802.11b, etc.) to the client remote elements 16, 18, 20, 22. The communications means 28, 30 between the access elements 12, 14 and the central control element 24 is typically an Ethernet network, but it could be anything else which is appropriate to the environment. As described in U.S. Application Ser. No. 10/155,938 (US Patent No. 7,212,837), the access elements 12, 14 and the central control element 24 tunnel network traffic associated with corresponding remote client elements 16, 18; 20, 22 via direct access lines 28 and 30, respectively. Central control element 24 is also operative to bridge the network traffic between the remote client elements 16, 18; 20, 22 transmitted through the tunnel with corresponding access elements 12, 14.

As described in the above-identified patent applications, central control element 24 operates to perform data link layer management functions, such as authentication and association on behalf of access elements 12, 14. For example, the central control element 24 provides processing to dynamically configure a wireless Local Area Network of a system according to the invention while the access elements 12, 14 provide the acknowledgment of communications with the client remote elements 16, 18, 20, 22. The central control element 24 may for example process the wireless LAN management messages passed on from the client remote elements 16, 18; 20, 22 via the access elements 12, 14, such as authentication requests and authorization requests, whereas the access elements 12, 14 provide immediate acknowledgment of the communication of those messages without conventional processing thereof. Similarly, the central control element 24 may for example process physical layer information. Still further, the central control element 24 may for example process information collected at the access elements 12, 14 on channel characteristic, propagation, and interference or noise, on the other hand, access elements 12, 14 may be configured to transmit beacon packets and probe response frames automatically without intervention or control by a central control element 24. Central control elements 25, 26 and associated access elements 13, 15 operate in a similar or identical manner. Other system architectures are possible. For example, U.S. Application Ser. No. 10/407,357 (US Patent No. 7,301,926) discloses a system architecture where the access elements, such as access elements 12-15, are directly connected to LAN segment 10.

SIP server 70, in one embodiment, is a call control node hosting functionality for facilitating the initiation of sessions between two end-systems. In one embodiment, SIP server 70 includes authentication mechanisms to identify and authenticate users to allow or deny access to the session initiation functionality. In one embodiment, SIP server 70 includes or is operably connected to a user database storing user names in association with corresponding passwords to allow for authentication of users based on password. SIP server 70 includes registration and session initiation functionality. Registration functionality allows users to register with SIP server 70 to allow incoming session requests to be connected with the user. Session initiation functionality allows the user to initiate sessions with one or more end systems. Mobile stations, such as remote client elements 16, 18, 20, 22 and dual-mode wireless client 99, in one implementation, include a SIP client operative to interact with SIP server 70. In one embodiment, the SIP server 70 and the SIP clients implement the Session Initiation Protocol (SIP), initially specified in IETF RFC 2543. One skilled in the art will recognize that other suitable session initiation, call or application signaling protocols can be used, such as H.323. In one embodiment, the remote client elements 16, 18, 20, 22 include an application that interacts with remote client elements by exchanging data or multimedia elements over a computer network. For example, the remote client elements 16, 18, 20, 22 may include a telephony application that uses the SIP client residing on each remote client element to establish the session during which voice data, or voice and video data, are exchanged between remote client elements.

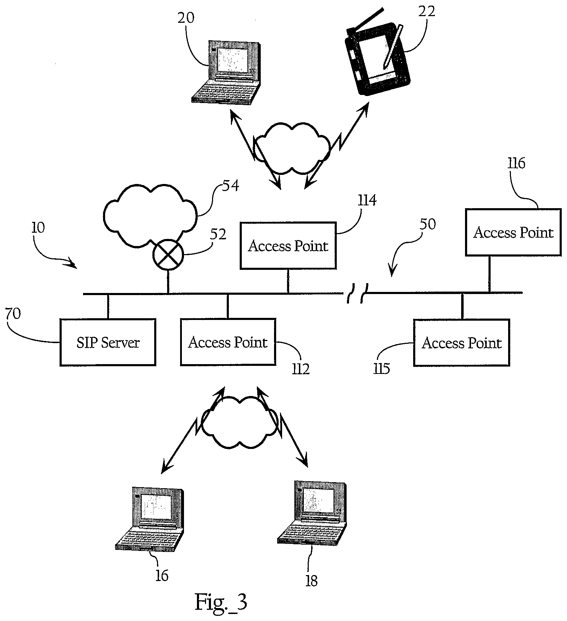

Implementations of the present invention can be incorporated into other wireless network system architectures. Figure 3 illustrates another wireless network system architecture comprising a plurality of substantially autonomous access points 112-116, at least some of which are configured as border access points to transmit the border information described herein.

Generally, the functionality of the access points or access elements comprises a radio transceiver or radio module and a link layer control unit. In one embodiment, the WLAN functionality described herein can be implemented in a wireless network interface chip set, such as an 802.11 network interface chip set. Radio module 30 includes frequency-based modulation/demodulation functionality for, in the receive direction, demodulating radio frequency signals and providing digital data streams, and in the transmit direction, receiving digital data streams and providing frequency modulated signals corresponding to the digital data stream. In one embodiment, a suitable transceiver includes an Orthogonal Frequency Division Multiplexed modulation/demodulation unit. In one embodiment, the transceiver implements the OFDM functionality in a manner compliant with the IEEE 802.11a and 802.11g protocol. Of course, other frequency modulation protocols may be employed. A link layer control unit implements data link layer functionality, such as detecting individual frames in the digital data streams, error checking the frames, transmitting beacon frames or packets on a regular basis, responding to probe requests, and the like. In one embodiment, the link layer control unit implements the IEEE 802.11 wireless network protocol. Other suitable wireless protocols can be used in the present invention.

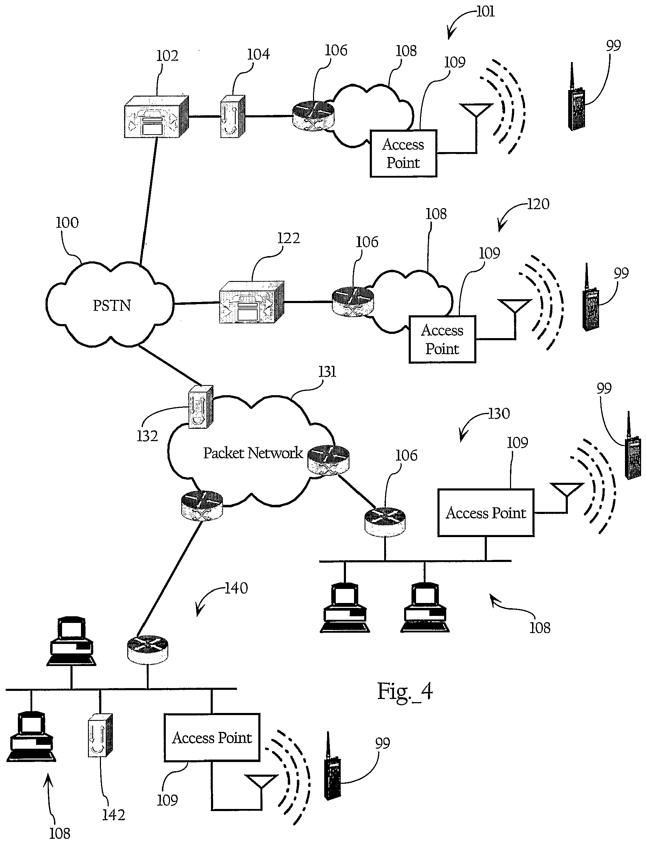

In addition, Figure 4 illustrates various VoIP over WLAN deployment architectures. For example, according to a first VoIP over WLAN deployment 101, analog PBX system 102 connects to the Public Switched Telephone Network (PSTN) 100. Dual-mode wireless client 99, for example, logically connects to a VoIP gateway 104 via a router or switch 106 and access point 109 associated with network 108. In a second deployment architecture 120, a VoIP PBX/gateway 122 connects the network 108 to PSTN 100. In a third deployment architecture 130, network 108 supports a connection to a remote gateway/PBX 132 accessible over packet network 131. Packet network 131 can be any suitable packet-based network such as the Internet, ATM network, a Frame Relay network, and/or any combination of the foregoing network types. In a fourth deployment architecture 140, trunk-side VoIP/signalling gateway 142 supports interoffice voice calls over packet network 131. Of course, one skilled in the art will recognize that a large variety of VoIP over WLAN deployment architectures are possible.

### B. Border Access Points and Border Information

Border access points 72a, 72b are configured to provide information that, in one implementation, facilitates mobility operations implemented by dual-mode wireless devices, such as dual-mode cellular phones and personal digital assistants. In one implementation, the information transmitted by border access points 72a, 72b merely indicates that the transmitting access point is a border access point. This information allows a mobile station that receives this information to determine that the transmitting access point is located proximally to a portal and/or the radio coverage boundary associated with the corresponding WLAN infrastructure. In one implementation, the border information can indicate whether the border access point is proximal to a portal (for example, by setting a corresponding flag), or merely proximal to the perimeter of a coverage area for a WLAN infrastructure where the coverage area has no defined points of ingress or egress. In one implementation, non-border access points 74 can also be configured to transmit an identifier indicating their status. For example, non-border access points 74 can transmit beacon frames including a non-border AP identifier. This information allows dual-mode wireless client 99 at initialization for example to determine that, although it does not currently detect a border access point, it is within a WLAN infrastructure that supports the border access point functionality and therefore can make certain assumptions in its selection of network access modes. In one implementation, a non-border access point may include a measure of the number of access points between it and a border access point. For example, this information could provide a simple count of the access points that would be encountered on a direct walk on the shortest path from the current location to the border or egress of the service area. In one implementation, information transmitted by border access points 72a, 72b indicate a zero as the count of access points to the border. This information can be used to simplify the velocity calculation in the dual-mode client 99, so that it can simply note whether it is seeing this count increase or decrease and whether the count is near zero. Another implementation includes access points 75 deployed "across" or outside the border of the coverage area 62 (see Figure 1) in addition to border access points 72a, 72b. In one implementation, access points 75 across the border 62 would advertise a negative value as the count to the service border. For example, an application of this would be to deploy border access points at the doorways (or other portals) to a building and also have access points 75 deployed outside on the sidewalk or parking lot to the building.

Border access points 72a, 72b may also be configured to provide a variety of information that facilitates or enhances the mobility operations of dual-mode wireless client 99. For example, as discussed more fully below, border access points 72a, 72b may further provide affiliate information relating to supported cellular networks or other interoperability information, call control or signaling information, and geographic or location information.

In one implementation, the border information provided by the border access points 72a, 72b is contained in the beacon and/or probe response frames transmitted by the border access points 72a, 72b as part of their normal operation. In one implementation, a reserved bit or flag in the beacon and probe response frames could be set to indicate that the transmitting access point is a border access point. The beacon and probe response frames corresponding to the IEEE 802.11 protocol are extensible with a data structure called an information element. An information element is a data structure that is of the type-length-value format. In one implementation, the border information discussed above can be appended to the beacon and/or probe response frames as an information element. In one implementation, a single information element can contain all border information types (e.g., affiliate information, call control information, geographic information, etc.). In another implementation, a separate information element corresponds to each border information type.

### Affiliate Information

Affiliate information, in one implementation, is information relating to the cellular networks supported by or associated with the WLAN infrastructure including the border access points 72a, 72b. For example, the affiliate information may identify the cellular network providers (e.g., Sprint®, Cingular®, AT&T Wireless®, Verizon®, etc.) that support handoffs between the cellular network and the WLAN infrastructure. This allows dual-mode wireless client 99, for example, to determine whether the handoff of a voice call, for example, between the cellular network and the WLAN can be accomplished. Dual-mode wireless client 99, in one implementation, can also use this information in selecting an access mode for a voice call.

### Call Control Information

In one implementation, border access points 72a, 72b provide call control information that facilitates VoIP over WLAN sessions. In one implementation, the call control information comprises the network address of SIP server 70 or other call signaling/routing node accessible over the WLAN infrastructure. In one implementation, the call control information may also include identifiers for the protocols and/or handshake mechanisms supported by the call signaling node. For example, the call control information may indicate that the call signaling/routing node implements the SIP protocol, the H.323 protocol, and the like. The call control information may further indicate that the call signaling node requires authentication. In addition, call control information may also include information about the gateway for call signaling and phone registration with the cellular provider that can be carried in the beacon and probe response.

### Location Information

Border access points 72a, 72b, in one implementation, convey geographic location information allowing mobile stations to, for example, compute their locations relative to a portal 91a or 91b. In one implementation, the location information includes: 1) the location of the transmitting access point, and 2) the location of the other border access points whose coverage areas overlap with the corresponding portal. The locations of the border access points can be expressed as coordinate locations relative to the corresponding portal. In another implementation, the border access point locations can be expressed relative to an arbitrarily-defined origin. In another implementation, the origin itself can be defined relative to global geographic coordinates (e.g., latitudinal and longitudinal coordinates). In such implementations, the location information further comprises the location coordinates of the corresponding portal.

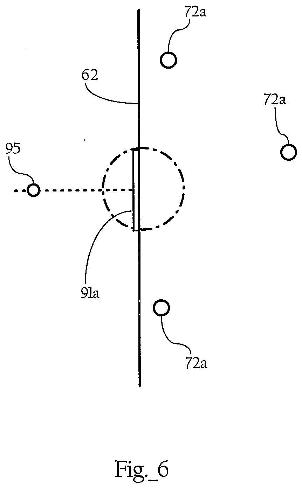

With knowledge of the locations of the border access points and the portal, a wireless client may locate itself relative to the portal by measuring the signal strength of frames received from the border access points and computing its location. In one implementation, the location information may further include orientation of the portal, such as coordinate location 95 (see Figure 6) outside the physical space 62 and oriented in a direction orthogonal to the portal 91a. This information allows dual-mode wireless client 99 to determine whether its current location is inside or outside of the portal. Furthermore, similar orientation information, such as coordinate locations for a point or points on the perimeter, or outside, of an intended coverage area can also be provided to allow the dual-mode wireless client 99 to locate itself relative to the perimeter of an intended area of WLAN radio coverage or some other arbitrarily defined boundary.

### C. Dual-Mode Wireless Client

As discussed herein, dual-mode wireless client 99 can use the border information transmitted by border access points 72a, 72b in connection with mobility-related operations, such as selecting a network type or domain upon initiation of a network application, such as a VoIP client. In one implementation, dual-mode wireless client 99 discards or ignores the border information if the strength of the signal carrying the border information is below a threshold signal strength. The inclusion of border information in beacon and probe response frames allows dual-mode wireless client 99 to obtain the information during normal 802.11-related functions, such as detecting and processing beacon frames and probe response frames. The hardware and software implemented in a dual-mode wireless client, such as a dual-mode telephone are generally known in the art. One of ordinary skill in the art will recognize how to modify the hardware and/or software implemented on such devices to make use of the border information described herein in mobility-related operations.

In addition, as discussed herein, dual-mode wireless client 99, in one implementation, uses location information transmitted by a border access point as well as the detected signal strengths of frames transmitted by identified access points in order to estimate its current location. In one implementation, dual-mode wireless client 99 makes use of the signal strength detection functionality residing on a wireless network interface chip set. For example, the IEEE 802.11 standard defines a mechanism by which RF energy is measured by the circuitry (e.g., chip set) on a wireless network adapter or interface. The IEEE 802.11 protocol specifies an optional parameter, the receive signal strength indicator (RSSI). This parameter is a measure by the PHY layer of the energy observed at the antenna used to receive the current packet or frame. RSSI is measured between the beginning of the start frame delimiter (SFD) and the end of the PLCP header error check (HEC). This numeric value, in some implementations, is an integer with an allowable range of 0-255 (a 1-byte value). Other chipsets only provide a 4-bit value. Typically, 802.11 chip set vendors have chosen not to actually measure 256 different signal levels. Accordingly, each vendor's 802.11-compliant adapter has a specific maximum RSSI value ("RSSI_Max"). Therefore, the RF energy level reported by a particular vendor's wireless network adapter will range between 0 and RSSI_Max. Resolving a given RSSI value reported by a given vendor"s chip set to an actual power value (dBm) can be accomplished by reference to a conversion table. In addition, some wireless networking chip sets actually report received signal strength in dBm units, rather than or in addition to RSSI.

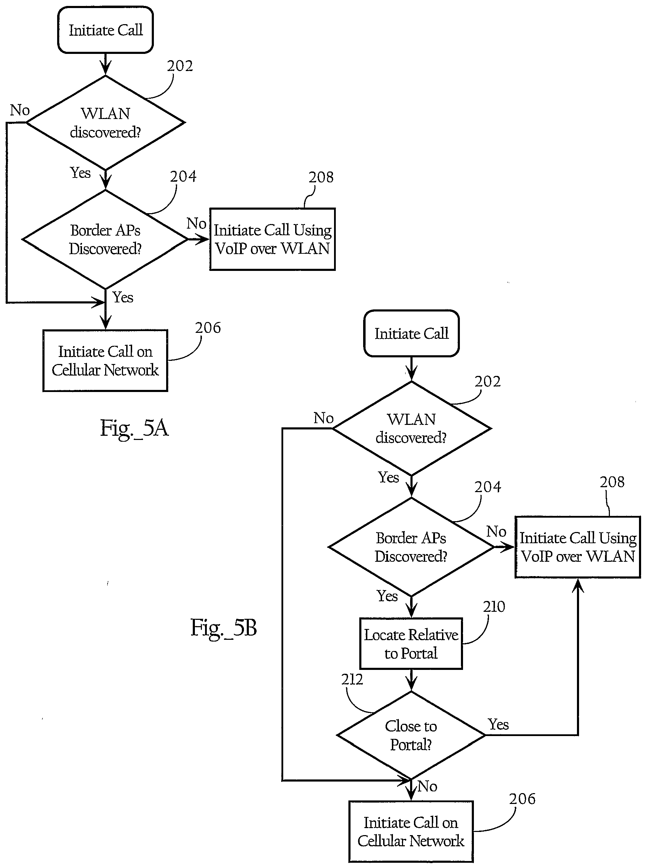

Figure 5A sets forth a method, according to one implementation of the present invention, where border access point information can be used in selecting an access mode (e.g., cellular network v. WLAN) upon initiation of a given call. Upon initiation of a call, dual mode wireless client 99 determines whether a WLAN has been discovered (202) and whether a border access point has been discovered (204). As discussed above, dual-mode wireless client 99 can make this determination by processing beacon and probe response frames for border access point identifiers and the like. As Figure 5A illustrates, dual-mode wireless client 99 can be configured to initiate a voice call session using the WLAN infrastructure (208), unless a border access point has been discovered (204). In this instance, dual-mode wireless client 99 initiates the call on the cellular network. As one skilled in the art will recognize, however, this is one possible use of the border information provided by the border access points 72a, 72b.

Figure 5B illustrates a method, according to another implementation of the present invention, that also uses location information provided by border access points in selecting a network access mode upon initiation of a call. Similar to the method illustrated in Figure 5A, if dual-mode wireless client 99 discovers a border access point (204), it computes its estimated location using the signal strength information as detected during receipt of frames transmitted by access points whose location is identified in the border information (210). As Figure 5B illustrates, if the estimated location is within a threshold distance of the corresponding portal 91a (212), dual-mode wireless client 99 initiates the contemplated call on the cellular network (206). Otherwise, dual-mode wireless client 99 initiates the call using the WLAN infrastructure (208). As one skilled in the art will recognize, various modifications are possible. For example, dual-mode wireless client 99 may be configured to employ the method illustrated in Figure 5B unless signal strength information for a sufficient number of access points is not received in order to triangulate or otherwise estimate location. In this circumstance, dual-mode wireless client 99 may be configured to implement the method illustrated in Figure 5A.

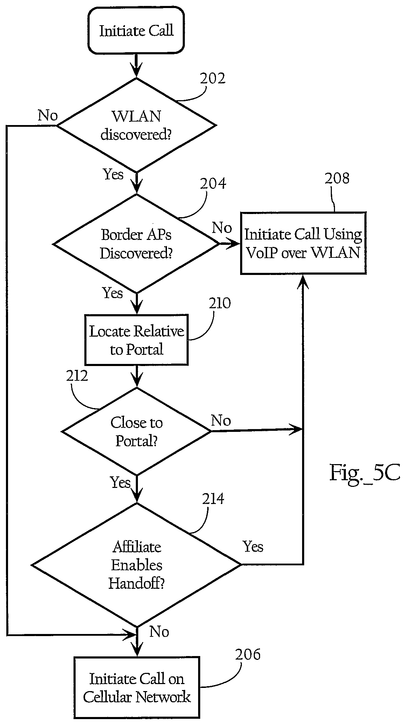

Figure 5C illustrates a method, according to another implementation of the invention, that incorporates affiliate information in the selection of a network access mode for initiating a voice call session. According to the selection logic of Figure 5C, dual-mode wireless client 99 may initiate the call using the VoIP over WLAN infrastructure, if the cellular network provider associated with the dual-mode wireless client 99 supports handoffs of active voice sessions between the cellular network and the WLAN (214). In other implementations, dual-mode wireless client 99 can be configured to select the cellular network to initiate all voice calls (as the sole decisional criteria) if the affiliate information indicates that handoffs are not supported.

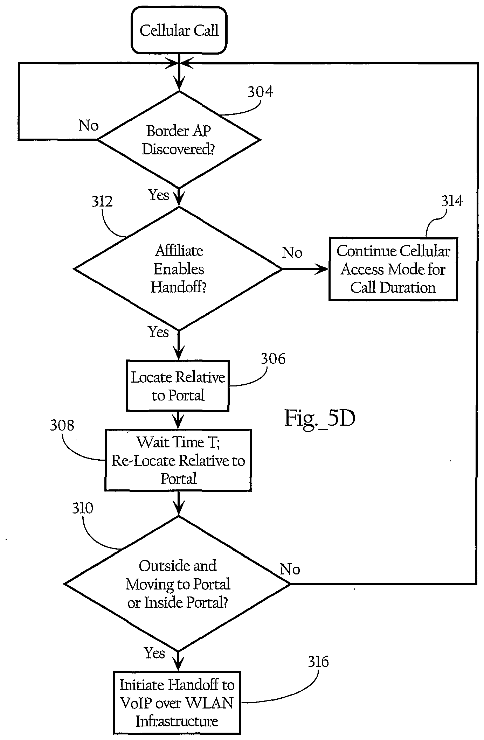

Figure 5D provides a method, according to one implementation of the invention, directed to deciding whether to initiate the handoff of an active voice session over a cellular network to a detected WLAN infrastructure. As illustrated below, in one implementation, the handoff determination is based in part on affiliate information and the user"s trajectory relative to an identified portal. As Figure 5D illustrates, dual-mode wireless client 99, in one implementation, may discover one or more border access points (304), such as border access points 72a, as the user approaches portal 91a. If one or more border access points is discovered (304), dual-mode wireless client 99, in one implementation, uses the affiliate information provided in the border information to determine whether handoff of the instant voice session would be successful (312). If not, dual-mode wireless client 99 continues in the cellular access mode for the duration of the voice session (314). If handoff is enabled however, dual-mode wireless client 99 computes its estimated location relative to an identified portal (306). Dual-mode wireless client 99, in one implementation, then waits a period of time (T) during which it receives additional beacon or other frames from the detected border access points, and then uses this updated signal strength information to re-compute its estimated location (308). Dual-mode wireless client 99 compares its first estimated location (306) to the second estimated location (308) to determine the user"s trajectory relative to the identified portal. For example, using the location information provided by the border access points 72a, for example, dual-mode wireless client 99 may determine that the user is outside, but moving toward, portal 91a. In one implementation, if the user is outside and moving toward, or inside of, an identified portal (310), dual-mode wireless client 99 then initiates the operations required to handoff the voice session to the WLAN infrastructure (316). For example, dual-mode wireless client 99 may associate with a selected access point, and contact SIP server 70 or other call control node to set up the logical connections required for the call session handoff. The exact handoff operations will depend on the cellular, VoIP, mobility and/or call signaling protocols employed.

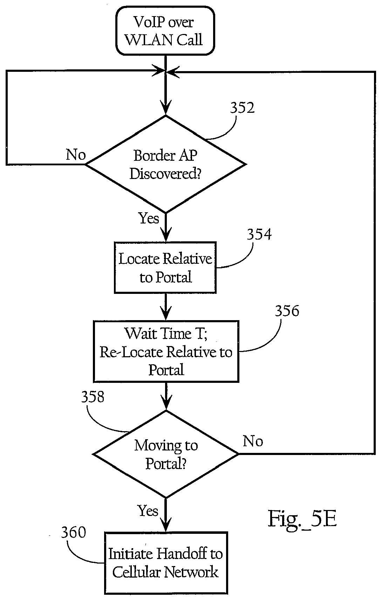

Figure 5E sets forth a method, according to an implementation of the invention, directed to determining whether to initiate a handoff of an existing VoIP over WLAN session to a cellular network. In one implementation, if dual-mode wireless client 99 discovers a border access point (352), it estimates its location relative to the portal identified by the border access point (354). In one implementation, dual-mode wireless client 99 waits a period of time and recomputes its location based on refreshed signal strength information in order to compute a trajectory relative to the portal (356). If dual-mode wireless client 99 detects that it is moving to the portal (358), it, in one implementation, initiates operations that would allow for handoff of the existing call session to the cellular network (360).

The invention has been explained with reference to specific embodiments. For example, although the embodiments described above operate in connection with handoff determinations between a WLAN network and a cellular network, the present invention can be used in connection with mobility operations between a first WLAN domain and a second WLAN domain. In addition, while embodiments of the present invention have been described as operating in connection with IEEE 802.11 networks, the present invention can be used in connection with any WLAN environment. Other embodiments will be evident to those of ordinary skill in the art. It is therefore not intended that the invention be limited except as indicated by the appended claims.

## Claims

1. A wireless network access point (72) operative to facilitate mobility operations between a first network associated with a first coverage area and a second network, comprising
a wireless transceiver;
a control unit coupled to the wireless transceiver, wherein the control unit is operative to cause the wireless transceiver to transmit border information, the border information comprising:
information indicating that the wireless network access point is proximal to the perimeter of the first coverage area;
location information identifying a geographic location of the wireless network access point, the location information enabling a wireless client device that receives the border information to determine its location relative to the wireless network access point; and
orientation information enabling a wireless client device that receives the border information to determine whether its current location is inside or outside the first coverage area.

2. The wireless access point of claim 1 wherein the first coverage area includes a portal, and wherein the border information indicates that the wireless network access point is proximal to the portal.

3. The wireless access point of claim 1 wherein the border information further comprises affiliate information identifying at least one cellular network with which handoffs with the first network can be accomplished.

4. The wireless access point of claim 1 wherein the border information further comprises call controller information identifying a call control node.

5. The wireless access point of claim 4 wherein the call controller information identifies a network address of the call control node.

6. The wireless access point of claim 5 wherein the call controller information identifies a supported protocol implemented by the call control node.

7. The wireless access point of claim 4 wherein the call control node is a SIP server.

8. The wireless access point of claim 4 wherein the call control node is a VoIP gateway.

9. The wireless access point of either claim 1 or claim 2 wherein the border information further comprises location information identifying the locations of at least two other border access points.

10. The wireless access point of claim 1 wherein the geographic location is provided in latitudinal and longitudinal coordinates.

11. The wireless access point of claim 2 wherein the location information further identifies the geographic location of the portal.

12. The wireless access point of claim 11 wherein the location information further includes orientation information associated with the portal.

13. The wireless access point of claim 12 wherein the orientation information comprises a coordinate location of a point outside of the portal.

14. The wireless access point of claim 13 wherein the coordinate location is oriented orthogonal to the portal.

15. The wireless access point of claim 1 wherein the control unit is operative to implement a wireless network protocol.

16. The wireless access point of claim 15 wherein the wireless network protocol is the IEEE 802.11 protocol.

17. The wireless access point of claim 1 wherein the border information is contained in a wireless frame.

18. The wireless access point of claim 16 wherein at least some of the border information is formatted as an information element in a wireless frame.

19. The wireless access point of claim 17 wherein the wireless frame is a beacon frame.

20. The wireless access point of claim 17 wherein the wireless frame is a probe response frame.

21. A dual-mode wireless client operative to communicate, in a first access mode, with a cellular network and, in a second access mode, with a wireless local area network comprising a plurality of access points distributed over a coverage area, comprising
a processor;
a memory;
a wireless network interface for communication with a wireless local area network;
a cellular network interface for communication with a cellular network;
a network software application, stored in the memory, comprising instructions operable to cause the processor and the dual-mode wireless client to transmit and receive data over a selected interface; and
access mode selection logic comprising instructions operable to cause the processor to
estimate a first geographic location of the dual-mode wireless client in response to first border information that comprises first location information and first orientation information, the first border information being received from a particular wireless network access point identifying a geographic location of the particular wireless network access point;
select, responsive to operation of the network software application, the wireless network or cellular network interface for initiation of a session based in part on the first geographic location of the dual-mode wireless client determined from the first border information received from the particular wireless network access point,
wherein, in order to select the wireless network or cellular network interface, the access mode selection logic further comprises instructions operable to cause the processor to:
determine if the estimated first geographical location of the dual-mode wireless client is within a threshold distance of a perimeter of the coverage area.

22. The dual-mode wireless client of claim 21 wherein the access mode selection logic is operative, through the wireless network interface, to discover a wireless local area network during operation of the network software application over the cellular network interface.

23. The dual-mode wireless client of claim 22 wherein the access mode selection logic is operative to handoff an existing session between a wireless area network and a cellular network based on the first border information received from the particular wireless network access point.

24. The dual-mode wireless client of claim 21 wherein the access mode selection logic is implemented as a software application stored in the memory.

25. The dual-mode wireless client of claim 21 wherein the access mode selection logic is implemented in hardware.

26. The dual-mode wireless client of claim 21 wherein the network software application is a VoIP client application.

27. The dual-mode wireless client of claim 21 wherein the network software application is a browser application.

28. The dual-mode wireless client of claim 21 wherein the coverage area includes a portal, and wherein the first border information indicates that the wireless network access point is proximal to the portal.

29. The dual- mode wireless client of claim 21 wherein the first border information further comprises affiliate information identifying at least one cellular network with which handoffs with the wireless local area network can be accomplished

30. The dual-mode wireless client of claim 21 wherein the first border information further comprises call controller information identifying a call control node.

31. The dual-mode wireless client of claim 30 wherein the call controller information identifies a network address of the call control node.

32. The dual-mode wireless client of claim 31 wherein the call controller information identifies a supported protocol implemented by the call control node.

33. The dual-mode wireless client of claim 30 wherein the call control node is a SIP server.

34. The dual-mode wireless client of claim 30 wherein the call control node is a VoIP gateway.

35. The dual-mode wireless client of claim 21 wherein the first border information further comprises location information identifying the geographic locations of the particular wireless network access point and at least two other border access points.

36. The dual-mode wireless client of claim 21 wherein the first geographic location is provided in latitudinal and longitudinal coordinates.

37. The dual-mode wireless client of claim 28 wherein the first location information further identifies the location of the portal.

38. The dual-mode wireless client of claim 37 wherein the first border information further includes portal orientation information associated with the portal.

39. The dual-mode wireless client of claim 38 wherein the portal orientation information comprises a coordinate location of a point outside of the portal.

40. The dual-mode wireless client of claim 37 wherein the access mode selection logic is operative to estimate the location of the dual-mode wireless client relative to the portal.

41. The dual-mode wireless client of claim 40 wherein the access mode selection logic is operative to select the wireless network or cellular network interface, at initiation or handoff of a session, based on the geographic location of the dual-mode wireless client relative to the portal.

42. A method facilitating mobility between a first wireless network and a second network, comprising
deploying a plurality of wireless access points over a first coverage area, wherein the coverage area is defined by a portal; and
configuring a first wireless access point located proximally to the portal to transmit border information indicating that the first wireless access point is proximal to the portal;
wherein the border information comprises location information and orientation information identifying a geographic location of the first wireless access point and a geographic location of other wireless access points having a coverage area overlapping the portal relative to the portal or to a perimeter of the first coverage area.

43. The method of claim 42 further comprising configuring a second access point to transmit information indicating the number of wireless access points on a selected path between the second wireless access point and the first wireless access point located proximally to the portal.

## Patentansprüche

1. Drahtloser Netzwerkzugangspunkt (72), welcher betrieben werden kann, um die Mobilitätsvorgänge zwischen einem ersten Netzwerk, welches mit einem ersten Abdeckungsbereich verbunden ist, und einem zweiten Netzwerk zu ermöglichen, aufweisend
ein drahtloses Sende-Empfangs-Gerät;
eine Steuereinheit, welche an das drahtlose Sende-Empfangs-Gerät gekoppelt ist, wobei die Steuereinheit betrieben werden kann, um das Übertragen von Randinformationen durch das drahtlose Sende-Empfangs-Gerät zu veranlassen, wobei die Randinformationen Folgendes aufweisen:
Informationen, welche zeigen, dass der drahtlose Netzwerkzugangspunkt proximal zu dem Umfang des ersten Abdeckungsbereichs ist;
Standortinformationen, welche einen geografischen Standort des drahtlosen Netzwerkzugangspunkts identifizieren, wobei die Standortinformationen einer drahtlosen Client-Vorrichtung, welche die Randinformationen empfängt, ermöglichen, ihren Standort in Bezug auf den drahtlosen Netzwerkzugangspunkt zu bestimmen; und
Orientierungsinformationen, welche einer drahtlosen Client-Vorrichtung, welche die Randinformationen empfängt, ermöglichen zu bestimmen, ob ihr derzeitiger Standpunkt innerhalb oder außerhalb des ersten Abdeckungsbereichs ist.

2. Drahtloser Zugangspunkt nach Anspruch 1, wobei der erste Abdeckungsbereich ein Portal einschließt und wobei die Randinformationen zeigen, dass der drahtlose Netzwerkzugangspunkt proximal zu dem Portal ist.

3. Drahtloser Zugangspunkt nach Anspruch 1, wobei die Randinformationen ferner Partnerinformationen aufweisen, welche mindestens ein Mobilfunknetz, mit welchem Basisstationswechsel mit dem ersten Netzwerk erreicht werden können, identifizieren.

4. Drahtloser Zugangspunkt nach Anspruch 1, wobei die Randinformationen ferner Anrufsteuerungsinformationen, welche einen Anrufsteuerknoten identifizieren, aufweisen.

5. Drahtloser Zugangspunkt nach Anspruch 4, wobei die Anrufsteuerungsinformationen eine Netzwerkadresse des Anrufsteuerknotens identifizieren.

6. Drahtloser Zugangspunkt nach Anspruch 5, wobei die Anrufsteuerungsinformationen ein unterstütztes Protokoll identifizieren, welches von dem Anrufsteuerknoten implementiert wird.

7. Drahtloser Zugangspunkt nach Anspruch 4, wobei der Anrufsteuerknoten ein SIP-Server ist.

8. Drahtloser Zugangspunkt nach Anspruch 4, wobei der Anrufsteuerknoten ein VoIP-Gateway ist.

9. Drahtloser Zugangspunkt nach Anspruch 1 oder Anspruch 2, wobei die Randinformationen ferner Standortinformationen aufweisen, welche die Standorte von mindestens zwei weiteren Randzugangspunkten identifizieren.

10. Drahtloser Zugangspunkt nach Anspruch 1, wobei der geografische Standort in Breiten- und Längenkoordinaten bereitgestellt ist.

11. Drahtloser Zugangspunkt nach Anspruch 2, wobei die Standortinformationen ferner den geografischen Standort des Portals identifizieren.

12. Drahtloser Zugangspunkt nach Anspruch 11, wobei die Standortinformationen ferner mit dem Portal verbundene Orientierungsinformationen einschließen.

13. Drahtloser Zugangspunkt nach Anspruch 12, wobei die Orientierungsinformationen einen Koordinatenstandort eines Punkts außerhalb des Portals aufweisen.

14. Drahtloser Zugangspunkt nach Anspruch 13, wobei der Koordinatenstandort orthogonal zu dem Portal orientiert ist.

15. Drahtloser Zugangspunkt nach Anspruch 1, wobei die Steuereinheit betrieben werden kann, um ein drahtloses Netzwerkprotokoll zu implementieren.

16. Drahtloser Zugangspunkt nach Anspruch 15, wobei das drahtlose Netzwerkprotokoll das IEEE 802.11-Protokoll ist.

17. Drahtloser Zugangspunkt nach Anspruch 1, wobei die Randinformationen in einem drahtlosen Frame enthalten sind.

18. Drahtloser Zugangspunkt nach Anspruch 16, wobei mindestens einige der Randinformationen in einem drahtlosen Frame als ein Informationselement formatiert sind.

19. Drahtloser Zugangspunkt nach Anspruch 17, wobei der drahtlose Frame ein Beacon-Frame ist.

20. Drahtloser Zugangspunkt nach Anspruch 17, wobei der drahtlose Frame ein Probe-Response-Frame ist.

21. Drahtloser Dual-Mode-Client, welcher betrieben werden kann, um in einem ersten Zugangsmodus mit einem Mobilfunknetz und in einem zweiten Zugangsmodus mit einem drahtlosen lokalen Netzwerk zu kommunizieren, welches mehrere Zugangspunkte aufweist, die über einem Abdeckungsbereich verteilt sind, Folgendes aufweisend
einen Prozessor;
einen Speicher;
eine drahtlose Netzwerkschnittstelle zur Kommunikation mit einem drahtlosen lokalen Netzwerk;
eine Mobilfunknetzschnittstelle zur Kommunikation mit einem Mobilfunknetz;
eine in dem Speicher gespeicherte Netzwerk-Softwareanwendung, welche Anweisungen aufweist, die betrieben werden können, um das Übertragen und Empfangen von Daten durch den Prozessor und den drahtlosen Dual-Mode-Client über eine ausgewählte Schnittstelle zu veranlassen; und
eine Zugangsmodus-Auswahllogik, welche Anweisungen aufweist, die betrieben werden können, um den Prozessor zum Durchführen von Folgendem zu veranlassen
Schätzen eines ersten geografischen Standorts des drahtlosen Dual-Mode-Clients als Antwort auf die ersten Randinformationen, welche erste Standortinformationen und erste Orientierungsinformationen aufweisen, wobei die ersten Randinformationen aus einem einzelnen drahtlosen Netzwerkzugangspunkt empfangen werden, welcher einen geografischen Standort des einzelnen drahtlosen Netzwerkzugangspunkts identifiziert;
Auswählen der drahtlosen Netzwerk- oder Mobilfunknetzschnittstelle abhängig von dem Betrieb der Netzwerk-Softwareanwendung zum Starten einer Sitzung, basierend teilweise auf dem ersten geografischen Standort des drahtlosen Dual-Mode-Clients, welcher aus den ersten Randinformationen, die aus dem einzelnen drahtlosen Netzwerkzugangspunkt empfangen werden, bestimmt wird, wobei die Zugangsmodus-Auswahllogik zum Auswählen der drahtlosen Netzwerk- oder Mobilfunknetzschnittstelle ferner Anweisungen aufweist, welche betrieben werden können, um den Prozessor zum Durchführen von Folgendem zu veranlassen:
Bestimmen, ob der geschätzte erste geografische Standort des drahtlosen Dual-Mode-Clients innerhalb eines Schwellenabstands eines Umfangs des Abdeckungsbereichs ist.

22. Drahtloser Dual-Mode-Client nach Anspruch 21, wobei die Zugangsmodus-Auswahllogik durch die drahtlose Netzwerkschnittstelle betrieben werden kann, um ein drahtloses lokales Netzwerk während des Betriebs der Netzwerk-Softwareanwendung über die Mobilfunknetzschnittstelle zu erkennen.

23. Drahtloser Dual-Mode-Client nach Anspruch 22, wobei die Zugangsmodus-Auswahllogik betrieben werden kann, um die Basisstation einer bestehenden Sitzung zwischen einem drahtlosen lokalen Netzwerk und einem Mobilfunknetz, basierend auf den ersten Randinformationen, welche aus dem einzelnen drahtlosen Netzwerkzugangspunkt empfangen werden, zu wechseln.

24. Drahtloser Dual-Mode-Client nach Anspruch 21, wobei die Zugangsmodus-Auswahllogik als eine in dem Speicher gespeicherte Softwareanwendung implementiert ist.

25. Drahtloser Dual-Mode-Client nach Anspruch 21, wobei die Zugangsmodus-Auswahllogik in Hardware implementiert ist.

26. Drahtloser Dual-Mode-Client nach Anspruch 21, wobei die Netzwerk-Softwareanwendung eine VoIP-Client-Anwendung ist.

27. Drahtloser Dual-Mode-Client nach Anspruch 21, wobei die Netzwerk-Softwareanwendung eine Browser-Anwendung ist.

28. Drahtloser Dual-Mode-Client nach Anspruch 21, wobei der Abdeckungsbereich ein Portal einschließt und wobei die ersten Randinformationen zeigen, dass der drahtlose Netzwerkzugangspunkt proximal zu dem Portal ist.

29. Drahtloser Dual-Mode-Client nach Anspruch 21, wobei die ersten Randinformationen ferner Partnerinformationen aufweisen, welche mindestens ein Mobilfunknetz, mit welchem Basisstationswechsel mit dem drahtlosen lokalen Netzwerk erreicht werden können, identifizieren.

30. Drahtloser Dual-Mode-Client nach Anspruch 21, wobei die ersten Randinformationen ferner Anrufsteuerungsinformationen, welche einen Anrufsteuerknoten identifizieren, aufweisen.

31. Drahtloser Dual-Mode-Client nach Anspruch 30, wobei die Anrufsteuerungsinformationen eine Netzwerkadresse des Anrufsteuerknotens identifizieren.

32. Drahtloser Dual-Mode-Client nach Anspruch 31, wobei die Anrufsteuerungsinformationen ein unterstütztes Protokoll identifizieren, welches von dem Anrufsteuerknoten implementiert wird.

33. Drahtloser Dual-Mode-Client nach Anspruch 30, wobei der Anrufsteuerknoten ein SIP-Server ist.

34. Drahtloser Dual-Mode-Client nach Anspruch 30, wobei der Anrufsteuerknoten ein VoIP-Gateway ist.

35. Drahtloser Dual-Mode-Client nach Anspruch 21, wobei die ersten Randinformationen ferner Standortinformationen aufweisen, welche die geografischen Standorte des einzelnen drahtlosen Netzwerkzugangspunkts und mindestens zwei weiterer Randzugangspunkte identifizieren.

36. Drahtloser Dual-Mode-Client nach Anspruch 21, wobei der erste geografische Standort in Breiten- und Längenkoordinaten bereitgestellt ist.

37. Drahtloser Dual-Mode-Client nach Anspruch 28, wobei die ersten Standortinformationen ferner den Standort des Portals identifizieren.

38. Drahtloser Dual-Mode-Client nach Anspruch 37, wobei die ersten Randinformationen ferner mit dem Portal verbundene Orientierungsinformationen einschließen.

39. Drahtloser Dual-Mode-Client nach Anspruch 38, wobei die Orientierungsinformationen des Portals einen Koordinatenstandort eines Punkts außerhalb des Portals aufweisen.

40. Drahtloser Dual-Mode-Client nach Anspruch 37, wobei die Zugangsmodus-Auswahllogik betrieben werden kann, um den Standort des drahtlosen Dual-Mode-Clients in Bezug auf das Portal zu schätzen.

41. Drahtloser Dual-Mode-Client nach Anspruch 40, wobei die Zugangsmodus-Auswahllogik betrieben werden kann, um die drahtlose Netzwerk- oder Mobilfunknetzschnittstelle, basierend auf dem geografischen Standort des drahtlosen Dual-Mode-Clients in Bezug auf das Portal beim Starten oder Wechseln der Basisstation einer Sitzung auszuwählen.

42. Verfahren zum Ermöglichen der Mobilität zwischen einem ersten drahtlosen Netzwerk und einem zweiten Netzwerk, aufweisend
Einsetzen von mehreren drahtlosen Zugangspunkten über einen ersten Abdeckungsbereich, wobei der Abdeckungsbereich durch ein Portal definiert ist; und
Konfigurieren eines ersten drahtlosen Zugangspunkts, welcher proximal zu dem Portal angeordnet ist, um Randinformationen, welche zeigen, dass der erste drahtlose Zugangspunkt proximal zu dem Portal ist, zu übertragen;
wobei die Randinformationen Standortinformationen und Orientierungsinformationen aufweisen, welche einen geografischen Standort des ersten drahtlosen Zugangspunkts und einen geografischen Standort der weiteren drahtlosen Zugangspunkte identifizieren, die einen Abdeckungsbereich, welcher das Portal in Bezug auf das Portal oder auf einen Umfang des ersten Abdeckungsbereichs überlappen, besitzen.

43. Verfahren nach Anspruch 42, ferner das Konfigurieren eines zweiten Zugangspunkts zum Übertragen von Informationen aufweisend, welche die Anzahl von drahtlosen Zugangspunkten auf einem ausgewählten Pfad zwischen dem zweiten drahtlosen Zugangspunkt und dem ersten drahtlosen Zugangspunkt, welcher proximal zu dem Portal angeordnet ist, zeigen.

## Revendications

1. Point d'accès (72) d'un réseau sans fil servant à faciliter des opérations de mobilité entre un premier réseau associé à une première zone de couverture et un second réseau, comprenant :
un émetteur-récepteur sans fil ;
une unité de contrôle couplée à l'émetteur-récepteur sans fil, l'unité de contrôle servant à amener l'émetteur-récepteur sans fil à transmettre des informations de limite, les informations de limite comprenant :
des informations indiquant que le point d'accès de réseau sans fil est proche du périmètre de la première zone de couverture ;
des informations de localisation identifiant un emplacement géographique du point d'accès de réseau sans fil, les informations de localisation permettant à un appareil client sans fil qui reçoit les informations de limite de déterminer son emplacement par rapport au point d'accès de réseau sans fil ; et
des informations d'orientation permettant à un appareil client sans fil de déterminer si son emplacement actuel est à l'intérieur ou à l'extérieur de la première zone de couverture.

2. Point d'accès d'un réseau sans fil selon la revendication 1, dans lequel la première zone de couverture inclut un portail et dans lequel les informations de limite indiquent que le point d'accès de réseau sans fil est proche du portail.

3. Point d'accès d'un réseau sans fil selon la revendication 1, dans lequel les informations de limite comprennent en outre des informations d'affiliation identifiant au moins un réseau cellulaire avec lequel on peut effectuer des transferts avec le premier réseau.

4. Point d'accès d'un réseau sans fil selon la revendication 1, dans lequel les informations de limite comprennent en outre des informations de contrôleur d'appel identifiant un noeud de contrôle d'appel.

5. Point d'accès d'un réseau sans fil selon la revendication 4, dans lequel les informations de contrôleur d'appel identifient une adresse réseau du noeud de contrôle d'appel.

6. Point d'accès d'un réseau sans fil selon la revendication 5, dans lequel les informations de contrôleur d'appel identifient un protocole supporté mis en oeuvre par le noeud de contrôle d'appel.

7. Point d'accès d'un réseau sans fil selon la revendication 4, dans lequel le noeud de contrôle d'appel est un serveur SIP.

8. Point d'accès d'un réseau sans fil selon la revendication 4, dans lequel le noeud de contrôle d'appel est une passerelle VoIP.

9. Point d'accès d'un réseau sans fil selon la revendication 1 ou 2, dans lequel les informations de limite comprennent en outre des informations de localisation identifiant les emplacements d'au moins deux autres points d'accès limites.

10. Point d'accès d'un réseau sans fil selon la revendication 1, dans lequel l'emplacement géographique est fourni en coordonnées latitudinales et longitudinales.

11. Point d'accès d'un réseau sans fil selon la revendication 2, dans lequel les informations de localisation identifient en outre l'emplacement géographique du portail.

12. Point d'accès d'un réseau sans fil selon la revendication 11, dans lequel les informations de localisation incluent en outre des informations d'orientation associées au portail.

13. Point d'accès d'un réseau sans fil selon la revendication 12, dans lequel les informations d'orientation comprennent une localisation en coordonnées d'un point hors du portail.

14. Point d'accès d'un réseau sans fil selon la revendication 13, dans lequel la localisation en coordonnées est orientée orthogonalement au portail.

15. Point d'accès d'un réseau sans fil selon la revendication 1, dans lequel l'unité de contrôle sert à mettre en oeuvre un protocole de réseau sans fil.

16. Point d'accès d'un réseau sans fil selon la revendication 15, dans lequel le protocole de réseau sans fil est le protocole IEEE 802.11.

17. Point d'accès d'un réseau sans fil selon la revendication 1, dans lequel les informations de limites sont contenues dans une trame sans fil.

18. Point d'accès d'un réseau sans fil selon la revendication 16, dans lequel au moins certaines des informations de limites sont formatées comme une information dans une trame sans fil.

19. Point d'accès d'un réseau sans fil selon la revendication 17, dans lequel la trame sans fil est une trame de balises.

20. Point d'accès d'un réseau sans fil selon la revendication 17, dans lequel la trame sans fil est une trame de réponse à requête.

21. Client sans fil bi-mode servant à communiquer, dans un premier mode d'accès, avec un réseau cellulaire et, dans un second mode d'accès, avec un réseau local sans fil comprenant plusieurs points d'accès distribués sur une surface de couverture, comprenant :
un processeur ;
une mémoire ;
une interface réseau sans fil pour communiquer avec un réseau local sans fil ;
une interface réseau cellulaire pour communiquer avec un réseau cellulaire ;
une application logicielle réseau stockée en mémoire, comprenant des instructions actionnables pour amener le processeur et le client sans fil bi-mode à transmettre et recevoir des données par une interface choisie ;
et
un programme de sélection de mode d'accès comprenant des instructions actionnables pour amener le processeur à :
estimer une première localisation géographique du client sans fil bi-mode en réponse à de premières informations de limites qui comprennent de premières informations de localisation et de premières informations d'orientation, les premières informations de limites étant reçues depuis un point d'accès réseau sans fil identifiant une localisation géographique d'un point d'accès réseau sans fil particulier ;
choisir, en réponse au fonctionnement de l'application du logiciel de réseau, le réseau sans fil ou l'interface de réseau cellulaire pour initier une session basée en partie sur la première localisation géographique du client sans fil bi-mode déterminée à partir des premières informations de limites reçues depuis le point d'accès réseau sans fil particulier, où, afin de choisir le réseau sans fil ou l'interface réseau cellulaire, le programme de sélection de mode d'accès comprend en outre des instructions actionnables pour amener le processeur à :
déterminer si la première localisation géographique estimée du client sans fil bi-mode se situe à moins d'une distance seuil du périmètre de la zone de couverture

22. Client sans fil bi-mode selon la revendication 21, dans lequel le programme de sélection de mode d'accès sert, via l'interface réseau sans fil, à découvrir un réseau local sans fil en cours de fonctionnement de l'application logicielle réseau via l'interface réseau cellulaire.

23. Client sans fil bi-mode selon la revendication 22, dans lequel le programme de sélection de mode d'accès sert à transférer une session existante entre un réseau local sans fil et un réseau cellulaire basé sur les premières informations de limites reçues du point d'accès réseau sans fil particulier.

24. Client sans fil bi-mode selon la revendication 21, dans lequel le programme de sélection de mode d'accès est mis en oeuvre comme application logicielle stockée en mémoire.

25. Client sans fil bi-mode selon la revendication 21, dans lequel le programme de sélection de mode d'accès est mis en oeuvre dans le hardware.

26. Client sans fil bi-mode selon la revendication 21, dans lequel l'application logicielle réseau est une application client VoIP.

27. Client sans fil bi-mode selon la revendication 21, dans lequel l'application logicielle réseau est une application de navigateur.

28. Client sans fil bi-mode selon la revendication 21, dans lequel la zone de couverture inclut un portail, et où les premières informations de limites indiquent que le point d'accès réseau sans fil est proche du portail.

29. Client sans fil bi-mode selon la revendication 21, dans lequel les premières informations de limites comprennent en outre des informations d'affiliation identifiant au moins un réseau cellulaire avec lesquelles on peut réaliser des transferts avec le réseau local sans fil.

30. Client sans fil bi-mode selon la revendication 21, dans lequel les premières informations de limites comprennent en outre des informations de contrôleur d'appel identifiant un noeud de contrôle d'appel.

31. Client sans fil bi-mode selon la revendication 30, dans lequel les informations de contrôle d'appel identifient une adresse réseau du noeud de contrôle d'appel.

32. Client sans fil bi-mode selon la revendication 31, dans lequel les informations de contrôleur d'appel identifient un protocole supporté mis en oeuvre par le noeud de contrôle d'appel.

33. Client sans fil bi-mode selon la revendication 30, dans lequel le noeud de contrôle d'appel est un serveur SIP.

34. Client sans fil bi-mode selon la revendication 30, dans lequel le noeud de contrôle d'appel est une passerelle VoIP.

35. Client sans fil bi-mode selon la revendication 21, dans lequel les informations de limite comprennent en outre des informations de localisation identifiant les emplacements d'au moins deux autres points d'accès limites.

36. Client sans fil bi-mode selon la revendication 21, dans lequel le premier emplacement géographique est fourni en coordonnées latitudinales et longitudinales.

37. Client sans fil bi-mode selon la revendication 28, dans lequel les informations de localisation identifient en outre l'emplacement géographique du portail.

38. Client sans fil bi-mode selon la revendication 37, dans lequel les premières informations de localisation incluent en outre des informations d'orientation associées au portail.

39. Client sans fil bi-mode selon la revendication 38, dans lequel les informations d'orientation du portail comprennent une localisation en coordonnées d'un point hors du portail.

40. Client sans fil bi-mode selon la revendication 37, dans lequel le programme de sélection de mode d'accès sert à estimer la localisation du client sans fil bi-mode par rapport au portail.

41. Client sans fil bi-mode selon la revendication 40, dans lequel le programme de sélection de mode d'accès sert à choisir le réseau sans fil ou l'interface réseau cellulaire, à l'initiation ou au transfert d'une session, en fonction de la localisation géographique du client sans fil bi-mode par rapport au portail.

42. Procédé de facilitation de la mobilité entre un premier réseau sans fil et un second réseau, comprenant :
le déploiement de plusieurs points d'accès sans fil sur une première zone de couverture, la zone de couverture étant définie par un portail ; et
la configuration d'un premier point d'accès sans fil près du portail pour transmettre des informations de limites indiquant que le premier point d'accès sans fil est proche du portail,
où les informations de limites comprennent des informations de localisation et des informations d'orientation identifiant une localisation géographique du premier point d'accès sans fil et une localisation géographique d'autres points d'accès sans fil ayant une surface de couverture recoupant le portail par rapport au portail ou au périmètre de la première zone de couverture.

43. Procédé selon la revendication 42, comprenant en outre la configuration d'un second point d'accès pour transmettre des informations indiquant le nombre de points d'accès sans fil sur une voie choisie entre le second point d'accès sans fil et le premier point d'accès sans fil situé près du portail.
